# FASCICULE DE BREVET EUROPEEN

(11) **EP 2 432 827 B1**
(45) Date de publication et mention de la délivrance du brevet: **13.04.2016**
(21) Numéro de dépôt: 10727666.9
(22) Date de dépôt: 20.05.2010
(51) Int. Cl.: C08K 5/548, C08L 9/00

(54) **COMPOSITION DE CAOUTCHOUC COMPORTANT UN AGENT DE COUPLAGE ORGANOSILANE**
KAUTSCHUKZUSAMMENSETZUNG MIT EINEM ORGANOSILANKOPPLER
RUBBER COMPOSITION INCLUDING AN ORGANOSILANE COUPLING AGENT

(30) Priorité: 20.05.2009 FR 0902451
(43) Date de publication de la demande: 28.03.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LONGCHAMBON, Karine, F-63110 Beaumont (FR); ARAUJO DA SILVA, José Carlos, F-63430 Pont Du Chateau (FR); SEEBOTH, Nicolas, F-63000 Clermont-Ferrand (FR)
(74) Mandataire: Cohen, Sylvia
(86) Numéro de dépôt international: PCT/EP2010/003114
(87) Numéro de publication internationale: WO 2010/133371

(56) Documents cités:
- WO-A1-2004/052981
- WO-A1-2006/013056
- WO-A1-2007/098784
- GB-A- 1 299 941

## Description

La présente invention est relative aux compositions de caoutchoucs diéniques renforcées d'une charge inorganique telle que silice, utilisables notamment pour la fabrication de pneumatiques ou produits semi-finis pour pneumatiques tels que des bandes de roulement.

On sait que d'une manière générale, pour obtenir les propriétés de renforcement optimales conférées par une charge, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans cette matrice.

De manière tout à fait connue, le noir de carbone présente de telles aptitudes, ce qui n'est en général pas le cas des charges inorganiques. En effet, pour des raisons d'affinités réciproques, les particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en oeuvre ("processabilité") plus difficile qu'en présence de noir de carbone.

Depuis que les économies de carburant et la nécessité de protéger l'environnement sont devenues une priorité, il s'est avéré cependant nécessaire de produire des pneumatiques ayant une résistance au roulement réduite, sans pénalisation de leur résistance à l'usure. Ceci a été rendu possible notamment grâce à la découverte de nouvelles compositions de caoutchouc renforcées de charges inorganiques spécifiques qualifiées de "renforçantes", capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant.

De telles compositions de caoutchouc, comportant des charges inorganiques renforçantes du type siliceuses ou alumineuses, ont par exemple été décrites dans les brevets ou demandes de brevet EP-A-0501227 (ou US-A-5227425), EP-A-0735088 (ou US-A-5852099), EP-A-0810258 (ou US-A-5900449), EP-A-0881252, WO99/02590, WO99/02601, WO99/02602, WO99/28376, WO00/05300, WO00/05301.

On citera en particulier les documents EP-A-0501227, EP-A-0735088 ou EP-A-0881252 qui divulguent des compositions de caoutchouc diénique renforcées de silices précipitées à haute dispersibilité, de telles compositions permettant de fabriquer des bandes de roulement ayant une résistance au roulement nettement améliorée, sans affecter les autres propriétés en particulier celles d'adhérence, d'endurance et de résistance à l'usure. De telles compositions présentant un tel compromis de propriétés contradictoires sont également décrites dans les demandes EP-A-0810258 et WO99/28376, avec à titre de charges inorganiques renforçantes des charges alumineuses (alumines ou (oxyde)hydroxydes d'aluminium) spécifiques à dispersibilité élevée, ou encore dans les demandes WO00/73372 et WO00/73373 décrivant des oxydes de titane spécifiques du type renforçants.

L'utilisation de ces charges inorganiques spécifiques, hautement dispersibles, à titre de charge renforçante majoritaire ou non, a certes réduit les difficultés de mise en oeuvre des compositions de caoutchouc les contenant, mais cette mise en oeuvre reste néanmoins plus difficile que pour les compositions de caoutchouc chargées conventionnellement de noir de carbone.

En particulier, il est nécessaire d'utiliser un agent de couplage, encore appelé agent de liaison, qui a pour fonction d'assurer la liaison entre la surface des particules de charge inorganique et l'élastomère, tout en facilitant la dispersion de cette charge inorganique au sein de la matrice élastomérique.

On rappelle ici que par "agent de couplage" (charge inorganique/élastomère), on doit entendre, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-W-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- W représente un groupe divalent permettant de relier Y et X.

Les agents de couplage ne doivent en particulier pas être confondus avec de simples agents de recouvrement de charge inorganique qui, de manière connue, peuvent comporter la fonction Y active vis-à-vis de la charge inorganique mais sont dépourvus de la fonction X active vis-à-vis de l'élastomère diénique.

Des agents de couplage, notamment (silice/élastomère diénique), ont été décrits dans un grand nombre de documents, les plus connus étant des organosilanes bifonctionnels porteurs d'au moins une fonction alkoxyle à titre de fonction Y, et, à titre de fonction X, d'au moins une fonction capable de réagir avec l'élastomère diénique telle que par exemple une fonction soufrée (i.e., comportant du soufre).

Ainsi, il a été proposé dans les demandes de brevet FR-A-2094859 ou GB-A-1310379 d'utiliser un agent de couplage mercaptoalkoxysilane pour la fabrication de bandes de roulement de pneumatiques. Il fut rapidement mis en évidence et il est aujourd'hui bien connu que les mercaptoalkoxysilanes sont susceptibles de procurer d'excellentes propriétés de couplage silice/élastomère, mais que l'utilisation industrielle de ces agents de couplage n'est pas possible en raison de la très forte réactivité des fonctions soufrées type thiols -SH (fonctions X) conduisant très rapidement au cours de la préparation des compositions de caoutchouc, dans un mélangeur interne, à des vulcanisations prématurées encore appelées "grillage" ("*scorching*"), à des viscosités à l'état cru très élevées, en fin de compte à des compositions de caoutchouc quasiment impossibles à travailler et à mettre en oeuvre industriellement. Pour illustrer ce problème, on peut citer par exemple les documents FR-A-2206330, US-A-3873489, US-A-4002594.

Pour remédier à cet inconvénient, il a été proposé de remplacer ces mercaptoalkoxysilanes par des polysulfures d'alkoxysilanes, notamment des polysulfures de bis-(alkoxylsilylpropyle) tels que décrits dans de très nombreux documents (voir par exemple FR-A-2149339, FR-A-2206330, US-A-3842111, US-A-3873489, US-A-3997581, EP-A-680997 ou US-A-5650457, EP-A-791622 ou US-A-5733963, DE-A-19951281 ou EP-A-1043357, WO00/53671). Parmi ces polysulfures, doivent être cités notamment le tétrasulfure de bis 3-triéthoxysilylpropyle (en abrégé TESPT) et le disulfure de bis 3-triéthoxysilylpropyle (en abrégé TESPD).

Ces polysulfures d'alkoxysilanes, en particulier le TESPT, sont généralement considérés comme les produits apportant, pour des vulcanisats comportant une charge inorganique renforçante, en particulier de la silice, le meilleur compromis en termes de sécurité au grillage, de facilité de mise en oeuvre et de pouvoir renforçant. Ils sont à ce titre les agents de couplage les plus utilisés aujourd'hui dans les compositions de caoutchouc pour pneumatiques.

les Demanderesses ont trouvé de façon surprenante que de nouveaux agents de couplage de type organosilane permettaient notamment par rapport aux alcoxysilanes polysulfurés cités précédemment, d'améliorer encore la processabilité à cru des compositions les comportant ainsi que la sécurité au grillage.

L'invention a ainsi pour objet une composition de caoutchouc utilisable pour la fabrication de pneumatiques, à base d'au moins :
- un élastomère diénique,
- un système de réticulation à base de soufre,
- une charge inorganique à titre de charge renforçante,
- un agent de couplage de formule générale I suivante :

(HO)₃₋ₙ R¹ₙ Si - Z - Sₘ - R²

dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- R² représente un groupe hydrocarboné monovalent choisi parmi les alkyles, linéaires ou ramifiés, les cycloalkyles ou les aryles, ayant de 1 à 30 atomes de carbone,
- Z représente un groupe de liaison divalent comportant de 1 à 18 atomes de carbone,
- n est un nombre entier égal à 0, 1 ou 2,
- m est un nombre supérieur ou égal à 2.

Une telle composition permet également de façon tout à fait surprenante de diminuer de façon très importante le zinc des formulations de caoutchouterie renforcées d'une charge inorganique telle que silice, voire de le supprimer totalement, sans remplacer le zinc par un autre métal et tout en préservant les compositions de caoutchouc du problème de grillage prématuré lors de leur mise en oeuvre industrielle. Ce résultat s'avère d'autant plus surprenant que l'agent de couplage TESPT ne convient pas aux compositions dépourvues de zinc ou quasiment dépourvues de zinc.

En effet, on rappelle qu'un objectif à moyen terme des manufacturiers de pneumatiques est de supprimer le zinc ou ses dérivés de leurs formulations de caoutchouterie, en raison du caractère relativement toxique connu de ces composés, notamment vis-à-vis de l'eau et des organismes aquatiques (classement R50 selon directive européenne 67/548/CE du 9 décembre 1996).
Or la suppression de l'oxyde de zinc, spécifiquement dans des compositions de caoutchouc renforcées d'une charge inorganique telle que silice, pénalise très fortement les caractéristiques de mise en oeuvre ("processabilité") des compositions de caoutchouc à l'état cru, avec une réduction du temps de grillage qui est rédhibitoire du point de vue industriel.

Avantageusement, l'élastomère diénique étant choisi dans le groupe constitué par les polybutadiènes, les polyisoprènes synthétiques, le caoutchouc naturel, les copolymères de butadiène, les copolymères d'isoprène et les mélanges de ces élastomères.

De préférence, la charge inorganique renforçante est la charge renforçante majoritaire ; et plus préférentiellement c'est une charge siliceuse ou alumineuse.

L'invention concerne aussi un préparation d'une composition, caractérisé en ce qu'on incorpore au moins, par malaxage, à au moins (i) un élastomère diénique, (ii) une charge inorganique à titre de charge renforçante, (iii) un agent de couplage de formule générale I suivante :

(HO)₃₋ₙR¹ₙ Si - Z - Sₘ - R²

dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- R² représente un groupe hydrocarboné monovalent choisi parmi les alkyles, linéaires ou ramifiés, les cycloalkyles ou les aryles, ayant de 1 à 30 atomes de carbone,
- Z représente un groupe de liaison divalent comportant de 1 à 18 atomes de carbone,
- n est un nombre entier égal à 0, 1 ou 2,
- m est un nombre supérieur ou égal à 2,
et (iv) un système de vulcanisation à base de soufre.

L'invention concerne encore un pneumatique ou un produit semi-fini, notamment une bande de roulement comportant une composition à base d'au moins :
- un élastomère diénique,
- un système de réticulation à base de soufre,
- une charge inorganique à titre de charge renforçante,
- un agent de couplage de formule générale I suivante :

(HO)₃₋ₙ R¹ₙ Si - Z - Sₘ - R²

dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- R² représente un groupe hydrocarboné monovalent choisi parmi les alkyles, linéaires ou ramifiés, les cycloalkyles ou les aryles, ayant de 1 à 30 atomes de carbone,
- Z représente un groupe de liaison divalent comportant de 1 à 18 atomes de carbone,
- n est un nombre entier égal à 0, 1 ou 2,
- m est un nombre supérieur ou égal à 2.

### I. MESURES ET TESTS UTILISES

Les compositions de caoutchouc sont caractérisées, avant et après cuisson, comme indiqué ci-après.

### I-1. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### I-2. Temps de grillage

Les mesures sont effectuées à 130°C, conformément à la norme française NF T 43-005. L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Propriétés dynamiques :

Les propriétés dynamiques ΔG* et tan(δ)ₘₐₓ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349 - 99. On effectue un balayage en amplitude de déformation de 0,1 à 50% (cycle aller), puis de 50% à 0,1% (cycle retour). Les résultats exploités sont le module complexe de cisaillement dynamique (G*) et le facteur de perte (tan δ). Pour le cycle retour, on indique la valeur maximale de tan δ observée (tan(δ)ₘₐₓ), ainsi que l'écart de module complexe (ΔG*) entre les valeurs à 0,1% et à 50% de déformation (effet Payne).

### II. DESCRITION DETAILLEE DE L'INVENTION

Les compositions de l'invention sont donc à base d'au moins : (i) un (au moins un) élastomère diénique, (ii) une (au moins une) charge inorganique titre de charge renforçante, (iii) un (au moins un) organosilane de formule générale (I) à titre d'agent de couplage charge inorganique/ élastomère diénique (pce = parties pour cent parties d'élastomère, en poids).

Par l'expression composition "à base de", il faut entendre dans la présente demande une composition comportant le mélange et/ou le produit de réaction des différents constituants utilisés, certains de ces constituants de base (par exemple l'agent de couplage) étant susceptibles de, ou destinés à réagir entre eux, au moins en partie, lors des différentes phases de fabrication des compositions, en particulier au cours de leur vulcanisation (cuisson).

Dans la présente description, sauf indication expresse différente, tous les pourcentages (%) indiqués sont des % en masse.

### II-1. Elastomère diénique

Par élastomère ou caoutchouc "diénique", on entend de manière générale un élastomère issu au moins en partie (i.e. un homopolymère ou un copolymère) de monomères diènes (monomères porteurs de deux doubles liaisons carbone-carbone, conjuguées ou non). Les élastomères diéniques, de manière connue, peuvent être classés en deux catégories : ceux dits "essentiellement insaturés" et ceux dits "essentiellement saturés". Par élastomère diénique "essentiellement insaturé", on entend un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans cette définition et peuvent être qualifiés au contraire d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di-alkyl(C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

En résumé, de manière particulièrement préférentielle, l'élastomère diénique de la composition conforme à l'invention est choisi dans le groupe des élastomères diéniques (fortement insaturés) constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement (par exemple pour véhicules industriels), de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme intérieure étanche de pneumatique sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### 11-2. Charge inorganique renforçante

Par "charge inorganique renforçante", doit être entendu ici, de manière connue, toute charge inorganique ou minérale, quelles que soient sa couleur et son origine (naturelle ou de synthèse), encore appelée charge "blanche", charge "claire" ou encore charge "non-noire" (*"non-black filler"*) par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique, en particulier pour bande de roulement ; une telle charge se caractérise généralement, de manière connue, par la présence de groupes hydroxyle (-OH) à sa surface.

Préférentiellement, la charge inorganique renforçante est une charge du type siliceuse ou alumineuse, ou un mélange de ces deux types de charges.

La silice (SiO₂) utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HDS") sont préférées, en particulier lorsque l'invention est mise en oeuvre pour la fabrication de pneumatiques présentant une faible résistance au roulement ; comme exemples de telles silices, on peut citer les silices Ultrasil 7000 de la société Degussa, les silices Zeosil 1165 MP, 1135 MP et 1115 MP de la société Rhodia, la silice Hi-Sil EZ150G de la société PPG, les silices Zeopol 8715, 8745 ou 8755 de la Société Huber.

L'alumine (Al₂O₃) renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm. Comme exemples non limitatifs de telles alumines renforçantes, on peut citer notamment les alumines "Baikalox A125" ou "CR125" (société Baïkowski), "APA-100RDX" (Condéa), "Aluminoxid C" (Degussa) ou "AKP-G015" (Sumitomo Chemicals).

A titre d'autres exemples de charge inorganique susceptible d'être utilisée dans les compositions de caoutchouc des bandes de roulement de l'invention peuvent être encore cités des (oxyde-)hydroxydes d'aluminium, des aluminosilicates, des oxydes de titane, des carbures ou nitrures de silicium, tous du type renforçants tels que décrits par exemple dans les demandes WO 99/28376, WO 00/73372, WO 02/053634, WO 2004/003067, WO 2004/056915.

Lorsque les bandes de roulement de l'invention sont destinées à des pneumatiques à faible résistance au roulement, la charge inorganique renforçante utilisée, en particulier s'il s'agit de silice, a de préférence une surface BET comprise entre 60 et 350 m2/g. Un mode de réalisation avantageux de l'invention consiste à utiliser une charge inorganique renforçante, en particulier une silice, ayant une surface spécifique BET élevée, comprise dans un domaine de 130 à 300 m²/g, en raison du haut pouvoir renforçant reconnu de telles charges. Selon un autre mode préférentiel de réalisation de l'invention, on peut utiliser une charge inorganique renforçante, en particulier une silice, présentant une surface spécifique BET inférieure à 130 m²/g, préférentiellement dans un tel cas comprise entre 60 et 130 m²/g (voir par exemple demandes WO03/002648 et WO03/002649).

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-dessus.

L'homme du métier saura adapter le taux de charge inorganique renforçante selon la nature de la charge inorganique utilisée et selon le type de pneumatique concerné, par exemple pneumatique pour moto, pour véhicule de tourisme ou encore pour véhicule utilitaire tel que camionnette ou Poids lourd. De préférence, ce taux de charge inorganique renforçante sera choisi compris entre 20 et 200 pce, plus préférentiellement entre 30 et 150 pce, en particulier supérieur à 50 pce, et plus préférentiellement encore compris entre 60 et 140 pce.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. Comme exemples de telles charges organiques, on peut citer les charges organiques de polyvinylaromatique fonctionnalisé telles que décrites dans les demandes WO 2006/069792 et WO 2006/069793.

La charge inorganique renforçante peut être utilisée également associée à une charge renforçante organique, en particulier du noir de carbone, par exemple un noir du type HAF, ISAF, SAF, conventionnellement utilisé dans les pneumatiques et particulièrement dans les bandes de roulement des pneumatiques (par exemple noirs N115, N134, N234, N326, N330, N339, N347, N375, ou encore, selon les applications visées, les noirs de séries plus élevées, par exemple N660, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère sous la forme d'un masterbatch (voir par exemple demandes WO 97/36724 ou WO 99/16600).

La quantité de noir de carbone présente dans la charge renforçante totale peut varier dans de larges limites, elle est de préférence inférieure à celle de l'hydroxyde métallique renforçant. Avantageusement, on utilise du noir de carbone en très faible proportion, à un taux préférentiel inférieur à 10 pce. Dans les intervalles indiqués, on bénéficie des propriétés colorantes (agent de pigmentation noire) et anti-UV des noirs de carbone, sans pénaliser par ailleurs les performances typiques apportées par la charge inorganique renforçante. Bien entendu, la composition de l'invention elle peut être totalement dépourvue de noir de carbone.

### II-3. Agent de couplage

L'organosilane utilisé à titre d'agent de couplage selon l'invention a la formulation générale I suivante :

(HO)₃₋ₙ R¹ₙ Si - Z - Sₘ - R²

dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- R² représente un groupe hydrocarboné monovalent choisi parmi les alkyles, linéaires ou ramifiés, les cycloalkyles ou les aryles, ayant de 1 à 30 atomes de carbone,
- Z représente un groupe de liaison divalent comportant de 1 à 18 atomes de carbone,
- n est un nombre entier égal à 0, 1 ou 2,
- m est un nombre supérieur ou égal à 2, m est un nombre entier ou fractionnaire.

Z peut contenir un ou plusieurs hétéroatomes choisis parmi O, S et N.

De préférence n est égal à 1 et/ou m est égal à 2.

Avantageusement:
- R¹ est choisi parmi méthyle, éthyle, n-propyle et isopropyle, de préférence parmi méthyle et éthyle ;
- Z est choisi parmi les alkylènes en C₁-C₁₈ et les arylènes en C₆-C₁₂.

Selon un mode de réalisation, Z est choisi parmi les alkylènes en C₁-C₁₀ et plus préférentiellement Z est choisi parmi les alkylènes en C₁-C₄.

Selon un autre mode de réalisation, R¹ est un méthyle.

Préférentiellement R² est choisi parmi les alkyles ayant de 1 à 18 atomes de carbone, et plus préférentiellement encore R² est un otcyle.

Un agent de couplage qui convient particulièrement bien est le (3-(octyldisulfanyl)propyl)methylsilanediol dont la formule (I)° est tel que n est égal à 1, m est égal à 2, R¹ est un méthyle, Z est un propylène et R² est un octyle.

Les organosilanes de formule (I) selon l'invention, dans lesquels n est égal à 1 et m est égal à 2, peuvent être préparés selon un procédé de synthèse comportant les étapes suivantes,
- on additionne sur un diazodicarboxylate un mercaptan de formule (II) R²-SH, dans laquelle R² a la même signification que dans la formule (I), pour former une thiohydrazine,
- on substitue la thiohydrazine obtenue avec un second mercaptan de formule (III) :

   (R³O)₂ R¹ Si-Z-SH,

   dans laquelle :
   - R¹ et Z ont la même signification que dans la formule (I),
   - R³, identiques ou différents, représentent un groupe hydrocarboné monovalent choisi parmi les alkyles ayant de 1 à 6 atomes de carbone, de préférence ayant de 1 à 3 atomes de carbone,
- on conduit une hydrolyse en milieu acide permettant d'aboutir à l'orgnaosilane de formule (I) visé

On notera que l'homme du métier sait ajouter du soufre au organosilane disulfuré ainsi obtenu pour permettre un passage de S₂ à Sₓ où x est supérieur à 2.

L'homme du métier saura ajuster la teneur en organosilane de formule (I) en fonction des modes de réalisation particuliers de l'invention, notamment de la quantité de charge inorganique renforçante utilisée, le taux préférentiel représentant entre 2% et 20% en poids par rapport à la quantité de charge inorganique renforçante ; des taux inférieurs à 15% sont plus particulièrement préférés.

### II-5. Additifs divers

Les compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

De préférence, ces compositions comportent, à titre d'agent plastifiant préférentiel non aromatique ou très faiblement aromatique, au moins un composé choisi dans le groupe constitué par les huiles naphténiques, paraffmiques, huiles MES, huiles TDAE, les esters (en particulier trioléates) de glycérol, les résines plastifiantes hydrocarbonées présentant une haute Tg de préférence supérieure à 30°C, et les mélanges de tels composés.

Ces compositions peuvent également contenir, en complément des agents de couplage, des activateurs de couplage, des agents de recouvrement (comportant par exemple la seule fonction Y) de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des α,ω-dihydroxy-polyorganosiloxanes (notamment des α,ω-dihydroxy-polydiméthylsiloxanes), des acides gras comme par exemple l'acide stéarique.

A la charge renforçante précédemment décrite, c'est-à-dire la charge inorganique renforçante plus du noir de carbone le cas échéant, peuvent être également ajoutés, en fonction de l'application visée, des charges inertes (i.e., non renforçantes) telles que particules d'argile, bentonite, talc, craie, kaolin, utilisables par exemple dans des flancs ou des bandes de roulement de pneumatique colorés.

### II-6. Fabrication des compositions de caoutchouc

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel de l'invention, tous les constituants de base des compositions de l'invention, à l'exception du système de vulcanisation, à savoir la charge inorganique renforçante, l'agent de couplage de formule (I) et le noir de carbone sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

Le système de vulcanisation proprement dit est préférentiellement à base de soufre et d'un accélérateur primaire de vulcanisation, en particulier d'un accélérateur du type sulfénamide. A ce système de vulcanisation peuvent venir s'ajouter, incorporés au cours de la première phase non-productive et/ou au cours de la phase productive, divers accélérateurs secondaires ou activateurs de vulcanisation connus, tels que par exemple des acides gras comme l'acide stéarique, des dérivés guanidiques (en particulier diphénylguanidine), etc. On notera qu'il faut tenir compte de la nature des accélérateurs secondaires ou activateurs de vulcanisation (zinc ou dérivé du zinc tel uqe ZnO), pour respecter le taux de zinc souhaité, en particulier pour la réalisation d'une composition totalement dépouvue de zinc ou quasiment dépourvue de zinc (c'est-à-dire avec une teneur en zinc inférieure à 0,5 pce, et de préférence inférieure à 0,3 pce).
Le taux de soufre est de préférence compris entre 0,5 et 3,0 pce, celui de l'accélérateur primaire est de préférence compris entre 0,5 et 5,0 pce.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les compositions de caoutchouc précédemment décrites tant à l'état dit "cru" (i.e., avant cuisson) qu'à l'état dit "cuit" ou vulcanisé (i.e., après réticulation ou vulcanisation). Les compositions conformes à l'invention peuvent être utilisées seules ou en coupage (i.e., en mélange) avec toute autre composition de caoutchouc utilisable pour la fabrication de pneumatiques.

### III. EXEMPLES DE REALISATION DE L'INVENTION

### III-1 Synthèse du (3-(octyldisulfanyl)propyl)methylsilanediol

Le (3-(octyldisulfanyl)propyl)methylsilanediol est un agent de couplage conforme à l'invention de formule (I) dans laquelle :
n est égal à 1, m est égal à 2, R¹ est un méthyle, R² est un octyle et Z est un propylène.

La synthèse est réalisée en suivant le schéma réactionnel qui suit :

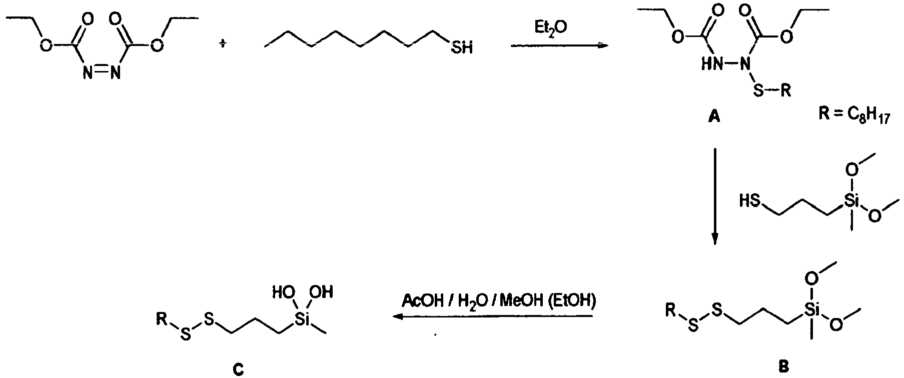

### a) Synthèse du composé A

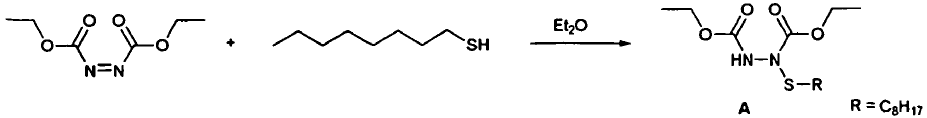

A une solution de diethylazodicarboxylate (DEAD de numéro CAS [1972-28-7] (51,0 g, 0,293 mol) dans du diethylether (100 mL) maintenue à -22°C est ajoutée goutte à goutte la solution d'octanethiol (45,0 g, 0,308 mol) dans le diéthyléther (250 mL) pendant 15 minutes. La température du milieu réactionnel reste comprise entre -20 et -25°C. Le milieu réactionnel est ensuite agité pendant 10-15 minutes à température entre -20 et - 25°C et pendant 1,0-1,5 heure à température ambiante. Après évaporation des solvants sous pression réduite (Tbain 21 °C, 11 mbar), de l'éther de pétrole (400 mL, fraction 40/60°C) est ajouté et le mélange est refroidi jusqu'à -18°C. Le précipité de diéthyl hydrazodicarboxylate (10,4 g) est filtré et est lavé par deux fois par de l'éther de pétrole froid (deux fois 20 mL à -18°C). Après évaporation des solvants sous pression réduite (Tbain 23 °C, 70 mbar) le produit A est obtenu sous forme d'une huile rouge. Une purification supplémentaire par chromatographie sur colonne de silice (gradient d'élution : éther de pétrole / acétate d'éthyle 10/1 jusqu'à 2/1) permet de recueillir le produit A sous forme d'une huile incolore (58,3 g, 0,173 mol) avec un rendement de 59%. La pureté molaire estimée par RMN 1 H est supérieure à 90%.

### b) Synthèse du composé B

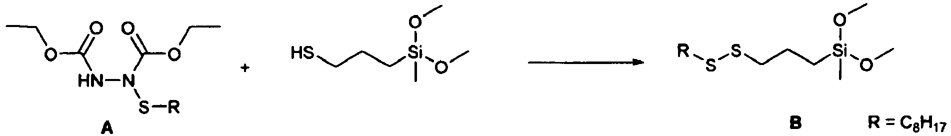

Au composé B (57,9 g, 0,181 mol) est ajouté 3-mercaptopropyldimethoxymethysilane (42,4 g, 0,235 mol). La réaction est exothermique. Le milieu réactionnel est ensuite agité pendant 2.0-3.5 heures à 120°C. Après refroidissement de l'éther de pétrole (550 mL, fraction 40-60°C) est ajouté. Le mélange est refroidi jusqu'à -18°C pendant 12 heures. Le précipité de diethyl hydrazodicarboxylate (28,9 g, rendement 91 %) est filtré et est lavé deux fois par de l'éther de pétrole (deux fois 20 mL, fraction 40/60, -18°C). Après évaporation des solvants sous pression réduite (Tbain 45 °C, 12 mbar) l'huile obtenue est distillée sous vide (la fraction collectée a un point d'ébullition compris entre 98°C (3,0×10-2 mbar) et 102 °C (4,3×10-2 mbar)). Le produit B (53,8 g, 0,167 mol) est obtenu sous forme d'une huile incolore avec un rendement de 92%. La pureté molaire estimée par RMN 1H et 29Si est supérieure à 96% (les 4% restant étant composés du produit A n'ayant pas réagi).

### c) Synthèse du composé C

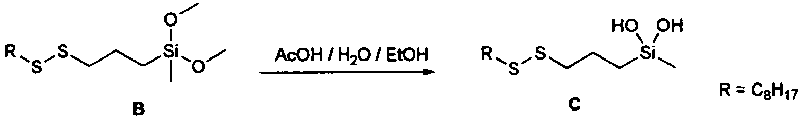

A un mélange d'acide acétique à 0,5 %, d'eau (105 mL) et d'éthanol (530 mL) est ajouté le composé B (53,0 g, 0,163 mol). La solution est agitée pendant 2-3 heures à température ambiante puis le mélange est versé sur de l'eau (3600 mL). Le produit est extrait par du diethylether (trois fois 300 mL). Après évaporation des solvants sous pression réduite (Tbain 21 °C) l'huile obtenue (60 g) est recristallisée dans l'éther de pétrole (850 mL, fraction 40-60°C) à -20°C pendant 12 à 15 heures. Les cristaux (30,1 g) sont filtrés, lavés par l'éther de pétrole (deux fois 80 mL, -18 °C) et séchés puis pendant 2 à 3 heures sous pression réduite. Après évaporation du filtrat jusqu'à 200-250 mL sous pression réduite (Tbain 21 °C) et cristallisation à -20°C pendant 2 à 3 heures les cristaux supplémentaires (5,4 g) sont filtrés, lavés par l'éther de pétrole (deux fois 25 mL, -18 °C) et séchés puis 2 à 3 heures sous pression réduite.

Les deux fractions sont réunies puis recristallisées dans un mélange éther de pétrole (580 mL, fraction 40-60°C), Et2O (230 mL) pendant 12 heures. Après filtration, lavage par l'éther de pétrole (deux fois 60 mL, -18 °C) puis évaporation des solvants résiduels sous pression réduite pendant 2-3 heures, le produit C (30,1 g, 0,101 mol) est obtenu avec un rendement de 62 % sous forme d'un solide blanc de point de fusion 57 °C. La pureté molaire estimée par RMN 1H et 29Si est supérieure à 98 %.

Le rendement peut être porté à 70 % par une cristallisation supplémentaire des eaux mères.

### III-2 Préparation des compositions de caoutchouc

On procède pour les essais qui suivent de la manière suivante: on introduit dans un mélangeur interne, rempli à 70% et dont la température initiale de cuve est d'environ 90°C, l'élastomère diénique (coupage SBR et BR), la silice complétée par une faible quantité de noir de carbone, l'agent de couplage puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute l'agent de recouvrement (lorsque ce dernier est présent) et le système de vulcanisation (soufre et accélérateur sulfénamide) sur un mélangeur externe (homo-finisseur) à 50°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### III-3 Caractérisation des compositions de caoutchouc

### III-3.1 Essai 1

Cet essai a pour but de démontrer les propriétés améliorées d'une composition de caoutchouc dite « classique » selon l'invention, ici le mot classique s'entend comme le fait que les compositions comportent un système de vulcanisation utilisé habituellement dans les compositions de caoutchouc pour pneumatique, comparée à des compositions de caoutchouc « classiques » mais utilisant des agents de couplage traditionnellement utilisés dans les compositions de caoutchouc pour bandes de roulement de pneumatiques ayant de la silice à titre de charge renforçante.

On prépare pour cela trois compositions à base d'un élastomère diénique (coupage SBR/BR) renforcées d'une silice hautement dispersible (HDS), ces compositions différant essentiellement par les caractéristiques techniques qui suivent :
- la composition C1 est une composition « classique » témoin contenant le composé TESPT (nom commercial : « Si69 ») à titre d'agent de couplage,
- la composition C2 est une composition « classique » contenant le composé TESPD (nom commercial : « Si266 ») à titre d'agent de couplage,
- la composition C3 « classique » conforme à l'invention, comprend le (3-(octyldisulfanyl)propyl)methylsilanediolà titre d'agent de couplage,

Afin que les propriétés des compositions C1 à C3 soient comparables, les agents de couplage des compositions C2 à C3 sont utilisés à un taux isomolaire en silicium comparativement à la composition témoin C1.

L'agent de couplage conventionnel utilisé dans la composition témoin C1 est le TESPT. On rappelle que le TESPT est le tétrasulfure de bis(3-triéthoxysilylpropyl) ayant pour formule développée (Et = éthyle) :

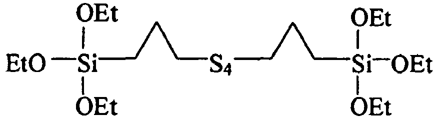

L'agent de couplage utilisé dans la composition C2 est le TESPD qui est un disulfure de bis(3-triéthoxysilylpropyl) et donc plus proche de l'agent de couplage conforme à l'invention : le '(3-(octyldisulfanyl)propyl)methylsilanediolpuisqu'il est également disulfure. Le TESPD a la formulation qui suit :

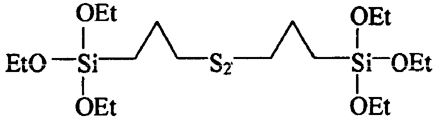

Les tableaux 1 et 2 donnent la formulation des différentes compositions (tableau 1 - taux des différents produits exprimés en pce ou parties en poids pour cent parties d'élastomère) ainsi que leurs propriétés avant et après cuisson (environ 40 min à 150°C) ; le système de vulcanisation est constitué par soufre et sulfénamide.

L'examen des résultats du tableau 2 concernant les propriétés avant cuisson montre tout d'abord que seule la composition C3 conforme à l'invention, comportant un agent de couplage de formule générale (I), comparée à la composition témoin C1 permet à la fois d'améliorer la sécurité au grillage (temps de grillage T5 supérieur à celui de C1) et d'améliorer de façon remarquable la processabilité de la composition (Mooney beaucoup plus faible que pour la composition C1, 30% de moins que celui de C1).

On peut noter que la composition C2, non conforme à l'invention, présente également une meilleure sécurité au grillage par rapport à la composition C1. Cependant cette propriété de sécurité au grillage est difficilement exploitable étant donné la valeur élevée de la plasticité Mooney de la composition C2 (qui la rend difficile à mettre en oeuvre à l'état cru).

Par ailleurs, l'observation des propriétés après cuisson de ces compositions montre que de façon tout à fait remarquable la composition C3 conforme à l'invention présente une hystérèse globalement équivalente à celle de la composition témoin C1 contrairement à la composition C2 pour laquelle on constate une augmentation importante de l'hystérèse (valeurs de tan(δ)ₘₐₓ et ΔG* élevées). Or l'hystérèse est un indicateur reconnu de la résistance au roulement des pneumatiques, plus l'hystérèse est faible, plus basse est la résistance au roulement et par voie de conséquence plus faible est la consommation d'énergie des véhicules automobiles équipés de tels pneumatiques.

Il apparaît clairement qu'une composition conforme à l'invention comportant à titre d'agent de couplage un organosilane de formule (I) permet d'obtenir des propriétés équivalentes, voire améliorées (processabilité, sécurité au grillage) par rapport à la composition classique témoin.

On peut noter par ailleurs que l'utilisation d'un organosilane conforme à l'invention, est particulièrement intéressante du point de vue de l'environnement. Elle permet en effet de régler le problème de dégagement de VOC (« volatile organic compounds »). En effet, l'organosilane conforme à l'invention ne possède aucun groupe alcoxyle (tel que les groupes éthoxyles du TESPT ou du TESPD) étant à l'origine du dégagement d'alcool (éthanol dans le cas du TESPT et du TESPD), tant au cours de la fabrication des compositions de caoutchouc elles-mêmes que lors de la cuisson des articles en caoutchouc incorporant ces compositions.

### 111-3.1 Essai 2

Cet essai a pour but de démontrer les propriétés améliorées des compositions de caoutchouc dépourvues de zinc selon l'invention comparées à des compositions de caoutchouc dépourvues de zinc mais utilisant des agents de couplage traditionnellement utilisés dans les compositions de caoutchouc pour bandes de roulement de pneumatiques ayant de la silice à titre de charge renforçante.

On prépare pour cela quatre compositions à base d'un élastomère diénique (coupage SBR/BR) renforcées d'une silice hautement dispersible (HDS), ces compositions différant essentiellement par les caractéristiques techniques qui suivent :
- la composition C1 est une composition « classique » témoin contenant du zinc (1,5 pce de ZnO) et le composé TESPT (nom commercial : « Si69 ») à titre d'agent de couplage, identique à celle de l'essai 1,
- la composition C'1 correspond à la composition C1 mais dépourvue de zinc,
- la composition C'2 est une composition dépourvue de zinc et comprend le composé TESPD (nom commercial : « Si266 ») à titre d'agent de couplage,
- la composition C'3 conforme à l'invention, est dépourvue de zinc et comprend le (3-(octyldisulfanyl)propyl)methylsilanediolà titre d'agent de couplage.

Seules la composition C'3 est conforme à l'invention.

Afin que les propriétés des compositions C1 et C'1 à C'3 soient comparables, les agents de couplage des compositions C'1 à C'3 sont utilisés à un taux isomolaire en silicium comparativement à la composition témoin C1.

Les tableaux 3 et 4 donnent la formulation des différentes compositions (tableau 3 - taux des différents produits exprimés en pce ou parties en poids pour cent parties d'élastomère) ainsi que leurs propriétés avant cuisson.

De façon attendue, on constate à la lecture du tableau 4, que la suppression de zinc dans la composition C'1 a pour conséquence une baisse de la processabilité (augmentation du Mooney) et une réduction de temps de grillage T5 donc de la sécurité au grillage, par rapport à la composition témoin C1.
La composition C'2 présente un temps au grillage T5 acceptable, mais une baisse de processabilité rédhibitoire (augmentation considérable du Mooney).

Par contre, de façon tout à fait étonnante on constate que la composition C'3 conforme à l'invention présente non seulement un temps de grillage identique à la composition témoin C1 qui comporte du zinc dans un taux habituel, mais également une processabilité très améliorée par rapport à cette même composition.

Il apparaît clairement qu'une composition conforme à l'invention comportant à titre d'agent de couplage un organosilane de formule (I) permet d'obtenir des propriétés à cru équivalentes voire améliorées par rapport à la composition classique témoin, sans utiliser de zinc, contrairement à des compositions comportant d'autres agents de couplage y compris des organosilanes disulfures mais de formule distincte de celle de l'invention.

On notera que l'utilisation d'un organosilane conforme à l'invention, est particulièrement intéressante du point de vue de l'environnement : vis-à-vis du problème de dégagement de VOC évoqué dans l'essai 1 et vis-à-vis de la possibilité de supprimer le zinc du système de vulcanisation d'une composition de caoutchouc sans détériorer les propriétés de cette composition.

**Tableau 1**

| **Composition N°** | **C1** | **C2** | **C3** |
|---|---|---|---|
| SBR (1) | 70 | 70 | 70 |
| BR (2) | 30 | 30 | 30 |
| Silice (3) | 80 | 80 | 80 |
| agent de couplage (4) | 6,4 | - | - |
| agent de couplage (5) | - | 5,8 | - |
| agent de couplage (6) | - | - | 7,2 |
| noir de carbone (7) | 5 | 5 | 5 |
| huile MES (8) | 6 | 6 | 6 |
| résine plastifiante (9) | 20 | 20 | 20 |
| DPG (10) | 1,5 | 1,5 | 1,5 |
| cire anti-ozone (11) | 1,5 | 1,5 | 1,5 |
| ZnO (12) | 1,5 | 1,5 | 1,5 |
| anti-oxydant (13) | 2 | 2 | 2 |
| acide stéarique (14) | 2 | 2 | 2 |
| soufre | 1 | 1 | 1 |
| accélérateur (15) | 2 | 2 | 2 |

| | | | |
|---|---|---|---|
| (1) SSBR avec 25% de styrène, 59% de motifs polybutadiène 1-2 et 20% de motifs polybutadiène 1-4 trans (Tg = -24°C) ; taux exprimé en SBR sec (SBR étendu avec 9% d'huile MES, soit un total de SSBR + huile égal à 76 pce) ; (2) BR (Nd) avec 0,7% de 1-2 ; 1,7% de trans 1-4 ; 98% de cis 1-4 (Tg = -105°C) (3) silice "ZEOSIL 1165 MP" de la société Rhodia sous forme de microperles (BET et CTAB : environ 150-160 m2/g) ; (4) TESPT ("SI69" de la société Evonik-Degussa) ; (5) TESPD (« Si266 » de la société Evonik-Degussa) ; (6) (3-(octyldisulfanyl)propyl)methylsilanediol (produit synthétisé); (7) N234 (société Evonik-Degussa) ; (8) huile MES ("Catenex SNR" de Shell) ; (9) résine polylimonène ("Dercolyte L120" de la société DRT) ; (10) diphénylguanidine (Perkacit DPG de la société Flexsys) ; (11) mélange de cires anti-ozone macro- et microcristallines ; (12) oxyde de zinc (grade industriel - société Umicore) ; (13) N-1,3-diméthylbutyl-N-phényl-para-phénylènediamine ("Santoflex 6-PPD" de la société Flexsys) ; (14) stéarine ("Pristerene 4931" - société Uniqema) ; (15) N-cyclohexyl-2-benzothiazyl-sulfénamide ("Santocure CBS" de la société Flexsys). | | | |

**Tableau 2**

| **Composition N°** | **C1** | **C2** | **C3** |
|---|---|---|---|
| *Propriété avant cuisson* | | | |
| Mooney (UM) | 93 | 121 | 65 |
| T5 (min) | 21 | >30 | >30 |
| *Propriétés après cuisson* | | | |
| ΔG* (MPa) | 4,75 | 5,75 | 4,48 |
| tan(δ)ₘₐₓ | 0,361 | 0,389 | 0,374 |

**Tableau 3**

| **Composition N°** | **C1** | **C'1** | **C'2** | **C'3** |
|---|---|---|---|---|
| SBR (1) | 70 | 70 | 70 | 70 |
| BR (2) | 30 | 30 | 30 | 30 |
| Silice (3) | 80 | 80 | 80 | 80 |
| agent de couplage (4) | 6,4 | 6,4 | - | - |
| agent de couplage (5) | - | - | 5,8 | - |
| agent de couplage (6) | - | - | - | 7,2 |
| noir de carbone (7) | 5 | 5 | 5 | 5 |
| huile MES (8) | 6 | 6 | 6 | 6 |
| résine plastifiante (9) | 20 | 20 | 20 | 20 |
| DPG (10) | 1,5 | 1,5 | 1,5 | 1,5 |
| cire anti-ozone (11) | 1,5 | 1,5 | 1,5 | 1,5 |
| ZnO (12) | 1,5 | - | - | - |
| anti-oxydant (13) | 2 | 2 | 2 | 2 |
| acide stéarique (14) | 2 | 2 | 2 | 2 |
| soufre | 1 | 1 | 1 | 1 |
| accélérateur (15) | 2 | 2 | 2 | 2 |

**Tableau 4**

| **Composition N°** | **C1** | **C'1** | **C'2** | **C'3** |
|---|---|---|---|---|
| *Propriétés avant cuisson* | | | | |
| Mooney (UM) | 93 | 97 | 129 | 64 |
| T5 (min) | 21 | 11 | 18 | 22 |

## Revendications

1. Composition de caoutchouc utilisable pour la fabrication de pneumatiques, à base d'au moins :
- un élastomère diénique,
- un système de réticulation à base de soufre,
- une charge inorganique à titre de charge renforçante,
- un agent de couplage de formule générale I suivante :
(HO)₃₋ₙ R¹ₙ Si - Z - Sₘ - R²
dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- R² représente un groupe hydrocarboné monovalent choisi parmi les alkyles, linéaires ou ramifiés, les cycloalkyles ou les aryles, ayant de 1 à 30 atomes de carbone,
- Z représente un groupe de liaison divalent comportant de 1 à 18 atomes de carbone,
- n est un nombre entier égal à 0, 1 ou 2,
- m est un nombre supérieur ou égal à 2.

2. Composition selon la revendication 1, dans laquelle n est égal à 1.

3. Composition selon l'une quelconque des revendications 1 ou 2, dans laquelle Z contient un ou plusieurs hétéroatomes choisis parmi O, S et N.

4. Composition selon l'une quelconque des revendications 1 à 3, dans laquelle m est égal à 2.

5. Composition selon l'une quelconque des revendications 1, 2 ou 4, dans laquelle :
- R¹ est choisi parmi méthyle, éthyle, n-propyle et isopropyle,
- Z est choisi parmi les alkylènes en C₁-C₁₈ et les arylènes en C₆-C₁₂.

6. Composition selon la revendication 5, dans laquelle Z est choisi parmi les alkylènes en C₁-C₁₀.

7. Composition selon l'une quelconque des revendications 5 ou 6, dans laquelle R¹ est un méthyle.

8. Composition selon l'une quelconque des revendications 5 à 7, dans laquelle R² est choisi parmi les alkyles de 1 à 18 atomes de carbone.

9. Composition selon l'une quelconque des revendications 5 à 8, dans laquelle m est égal à 2, R¹ est un méthyle, R² est un octyle et Z est un propylène.

10. Composition selon l'une quelconque des revendications 1 à 9, dans laquelle l'élastomère diénique étant choisi dans le groupe constitué par les polybutadiènes, les polyisoprènes synthétiques, le caoutchouc naturel, les copolymères de butadiène, les copolymères d'isoprène et les mélanges de ces élastomères.

11. Composition selon l'une quelconque des revendications 1 à 10, dans laquelle la charge inorganique renforçante est une charge siliceuse ou alumineuse.

12. Composition selon l'une quelconque des revendications 1 à 11, dans laquelle la quantité de charge inorganique renforçante est supérieure à 50 pce, parties en poids pour cent parties d'élastomères.

13. Composition selon l'une quelconque des revendications 1 à 12, dans laquelle le taux de zinc est inférieur à 0,5 pce.

14. Procédé de préparation d'une composition, **caractérisé en ce qu'**on incorpore au moins, par malaxage, à au moins (i) un élastomère diénique, (ii) une charge inorganique à titre de charge renforçante, (iii) un agent de couplage de formule générale I suivante :
(HO)₃₋ₙ R¹ₙ Si - Z - Sₘ - R²
dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- R² représente un groupe hydrocarboné monovalent choisi parmi les alkyles, linéaires ou ramifiés, les cycloalkyles ou les aryles, ayant de 1 à 30 atomes de carbone,
- Z représente un groupe de liaison divalent comportant de 1 à 18 atomes de carbone,
- n est un nombre entier égal à 0, 1 ou 2,
- m est un nombre supérieur ou égal à 2,
et (iv) un système de vulcanisation à base de soufre..
et **en ce qu'**il comporte les étapes suivantes :
- incorporer à l'élastomère diénique, dans un mélangeur, la charge renforçante et l'agent de couplage en malaxant thermomécaniquement le tout, en une ou plusieurs fois, jusqu'à atteindre une température maximale comprise entre 130°C et 200°C,
- refroidir l'ensemble à une température inférieure à 100°C,
- incorporer ensuite : le système de vulcanisation;
- malaxer le tout jusqu'à une température maximale inférieure à 120°C ;
- extruder ou calandrer la composition de caoutchouc ainsi obtenue.

15. Pneumatique ou produit semi-fini comportant une composition de caoutchouc selon l'une quelconque des revendications 1 à 13.

## Patentansprüche

1. Kautschukzusammensetzung, die zur Herstellung von Reifen verwendet werden kann, auf Basis von mindestens:
- einem Dienelastomer,
- einem Vernetzungssystem auf Basis von Schwefel,
- einem anorganischen Füllstoff als verstärkenden Füllstoff,
- einem Kupplungsmittel der folgenden allgemeinen Formel I:
(HO) ₃₋ₙ-R¹ₙSi-Z-Sₘ-R²
worin:
- die Variablen R¹ gleich oder verschieden sind und jeweils für eine einwertige Kohlenwasserstoffgruppe, die aus linearen und verzweigten Alkylresten, Cycloalkylresten oder Arylresten mit 1 bis 18 Kohlenstoffatomen ausgewählt ist, stehen,
- R² für eine einwertige Kohlenwasserstoffgruppe, die aus linearen und verzweigten Alkylresten, Cycloalkylresten oder Arylresten mit 1 bis 30 Kohlenstoffatomen ausgewählt ist, steht,
- Z für eine zweiwertige Verbindungsgruppe mit 1 bis 18 Kohlenstoffatomen steht,
- n eine ganze Zahl mit einem Wert von 0, 1 oder 2 ist,
- m eine Zahl größer gleich 2 ist.

2. Zusammensetzung nach Anspruch 1, wobei n gleich 1 ist.

3. Zusammensetzung nach Anspruch 1 oder 2, wobei Z ein oder mehrere Heteroatome, die aus 0, S und N ausgewählt sind, enthält.

4. Zusammensetzung nach einem der Ansprüche 1 bis 3, wobei m gleich 2 ist.

5. Zusammensetzung nach einem der Ansprüche 1, 2 oder 4, wobei:
- R¹ aus Methyl, Ethyl, n-Propyl und Isopropyl ausgewählt ist,
- Z aus C₁-C₁₈-Alkylenresten und C₆-C₁₂-Arylenresten ausgewählt ist.

6. Zusammensetzung nach Anspruch 5, wobei Z aus C₁-C₁₀-Alkylenresten ausgewählt ist.

7. Zusammensetzung nach Anspruch 5 oder 6, wobei R¹ für Methyl steht.

8. Zusammensetzung nach einem der Ansprüche 5 bis 7, wobei R² aus Alkylresten mit 1 bis 18 Kohlenstoffatomen ausgewählt ist.

9. Zusammensetzung nach einem der Ansprüche 5 bis 8, wobei m gleich 2 ist, R¹ für Methyl steht, R² für Octyl steht und Z für Propylen steht.

10. Zusammensetzung nach einem der Ansprüche 1 bis 9, wobei das Dienelastomer aus der Gruppe bestehend aus Polybutadienen, synthetischen Polyisoprenen, Naturkautschuk, Butadien-Copolymeren, Isopren-Copolymeren und Mischungen dieser Elastomere ausgewählt ist.

11. Zusammensetzung nach einem der Ansprüche 1 bis 10, wobei es sich bei dem verstärkenden anorganischen Füllstoff um einen silicium- oder aluminiumhaltigen Füllstoff handelt.

12. Zusammensetzung nach einem der Ansprüche 1 bis 11, wobei der Gehalt an verstärkendem anorganischem Füllstoff größer als 50 phe, Gewichtsteile pro hundert Teile Elastomer, ist.

13. Zusammensetzung nach einem der Ansprüche 1 bis 12, wobei der Zinkgehalt weniger als 0,5 phe beträgt.

14. Verfahren zur Herstellung einer Zusammensetzung, **dadurch gekennzeichnet, dass** man durch Kneten in mindestens (i) ein Dienelastomer mindestens (ii) einen anorganischen Füllstoff als verstärkenden Füllstoff, (iii) ein Kupplungsmittel der folgenden allgemeinen Formel I:
(HO) ₃₋ₙR¹ₙSi-Z-Sₘ-R²
worin:
- die Variablen R¹ gleich oder verschieden sind und jeweils für eine einwertige Kohlenwasserstoffgruppe, die aus linearen und verzweigten Alkylresten, Cycloalkylresten oder Arylresten mit 1 bis 18 Kohlenstoffatomen ausgewählt ist, stehen,
- R² für eine einwertige Kohlenwasserstoffgruppe, die aus linearen und verzweigten Alkylresten, Cycloalkylresten oder Arylresten mit 1 bis 30 Kohlenstoffatomen ausgewählt ist, steht,
- Z für eine zweiwertige Verbindungsgruppe mit 1 bis 18 Kohlenstoffatomen steht,
- n eine ganze Zahl mit einem Wert von 0, 1 oder 2 ist,
- m eine Zahl größer gleich 2 ist;
und (iv) ein Vulkanisationssystem auf Basis von Schwefel einarbeitet
und dass es folgende Schritte umfasst:
- Einarbeiten des verstärkenden Füllstoffs und des Kupplungsmittels in das Dienelastomer in einem Mischer durch ein- oder mehrmaliges thermomechanisches Kneten des Ganzen bis zum Erreichen einer Maximaltemperatur zwischen 130°C und 200°C,
- Abkühlen des Ganzen auf eine Temperatur von weniger als 100°C,
- anschließendes Einarbeiten des Vulkanisationssystems,
- Kneten des Ganzen bis zum Erreichen einer Maximaltemperatur von weniger als 120°C,
- Extrudieren oder Kalandrieren der so erhaltenen Kautschukzusammensetzung.

15. Reifen oder Halbzeug, umfassend eine Kautschukzusammensetzung nach einem der Ansprüche 1 bis 13.

## Claims

1. Rubber composition that can be used for the manufacture of tyres, based on at least:
- one diene elastomer;
- one sulphur-based crosslinking system;
- one inorganic filler as reinforcing filler;
- one coupling agent of general formula I below:
(HO)₃₋ₙ R¹ₙ Si - Z - Sₘ - R²
in which:
- R¹, which are identical or different, each represent a monovalent hydrocarbon-based group chosen from alkyls, which are linear or branched, cycloalkyls or aryls, having from 1 to 18 carbon atoms;
- R² represents a monovalent hydrocarbon-based group chosen from alkyls, which are linear or branched, cycloalkyls or aryls, having from 1 to 30 carbon atoms;
- Z represents a divalent bonding group comprising from 1 to 18 carbon atoms;
- n is an integer equal to 0, 1 or 2; and
- m is a number greater than or equal to 2.

2. Composition according to Claim 1, in which n is equal to 1.

3. Composition according to either one of Claims 1 and 2, in which Z contains one or more heteroatoms chosen from O, S and N.

4. Composition according to any one of Claims 1 to 3, in which m is equal to 2.

5. Composition according to any one of Claims 1, 2 or 4, in which:
- R¹ is chosen from methyl, ethyl, n-propyl and isopropyl,
- Z is chosen from C₁-C₁₈ alkylenes and C₆-C₁₂ arylenes.

6. Composition according to Claim 5, in which Z is chosen from C₁-C₁₀ alkylenes.

7. Composition according to any one of Claims 5 or 6, in which R¹ is a methyl.

8. Composition according to any one of Claims 5 to 7, in which R² is chosen from alkyls having from 1 to 18 carbon atoms.

9. Composition according to any one of Claims 5 to 8, in which m is equal to 2, R¹ is a methyl, R² is an octyl and Z is a propylene.

10. Composition according to any one of Claims 1 to 9, in which the diene elastomer being chosen from the group consisting of polybutadienes, synthetic polyisoprenes, natural rubber, butadiene copolymers, isoprene copolymers and mixtures of these elastomers.

11. Composition according to any one of Claims 1 to 10, in which the reinforcing inorganic filler is a siliceous or aluminous filler.

12. Composition according to any one of Claims 1 to 11, in which the amount of reinforcing inorganic filler is greater than 50 phr, parts by weight per hundred parts of elastomer.

13. Composition according to any one of Claims 1 to 12, in which the zinc content is less than 0.5 phr.

14. Process for preparing a composition, **characterized in that**, incorporated at least, by kneading, into at least (i) one diene elastomer, are (ii) an inorganic filler as reinforcing filler, (iii) a coupling agent of general formula I below:
(HO)₃₋ₙ R¹ₙ Si - Z - Sₘ - R²
in which:
- R¹, which are identical or different, each represent a monovalent hydrocarbon-based group chosen from alkyls, which are linear or branched, cycloalkyls or aryls, having from 1 to 18 carbon atoms;
- R² represents a monovalent hydrocarbon-based group chosen from alkyls, which are linear or branched, cycloalkyls or aryls, having from 1 to 30 carbon atoms;
- Z represents a divalent bonding group comprising from 1 to 18 carbon atoms;
- n is an integer equal to 0, 1 or 2; and
- m is a number greater than or equal to 2,
and (iv) a sulphur-based vulcanization system;
and **in that** it comprises the following steps:
- incorporating into the diene elastomer, in a mixer, the reinforcing filler and the coupling agent by thermomechanically kneading all the ingredients, one or more times, until a maximum temperature between 130°C and 200°C is reached;
- cooling the mixture down to a temperature below 100°C;
- then incorporating: the vulcanization system;
- kneading all the ingredients up to a maximum temperature below 120°C; and
- extruding or calendering the rubber composition thus obtained.

15. Tyre or semi-finished product comprising a rubber composition according to any one of Claims 1 to 13.
